# EUROPÄISCHE PATENTSCHRIFT

(11) **EP 0 807 508 B1**
(45) Veröffentlichungstag und Bekanntmachung des Hinweises auf die Patenterteilung: **24.07.2002**
(21) Anmeldenummer: 97250145.6
(22) Anmeldetag: 28.04.1997
(51) Int. Cl.: B29C 45/64

(54) **Verfahren und Vorrichtung zum Betreiben einer Spritzgiessmaschine**
Method and apparatus for operating an injection moulding machine
Procédé et dispositif pour faire fonctionner une machine à mouler par injection

(30) Priorität: 13.05.1996 DE 19620360
(43) Veröffentlichungstag der Anmeldung: 19.11.1997
(73) Patentinhaber: Demag Ergotech Wiehe GmbH, 06571 Wiehe (DE)
(72) Erfinder: Grunitz, Otto, Dipl.-Ing-, 06574 Wiehe (DE)
(74) Vertreter: Meissner, Peter E., Dipl.-Ing.

(56) Entgegenhaltungen:
- EP-A- 0 669 198
- US-A- 5 322 430
- PATENT ABSTRACTS OF JAPAN vol. 15, no. 370 (M-1159), 18. September 1991 -& JP 03 147825 A (TOSHIBA MACH CO LTD), 24. Juni 1991
- PATENT ABSTRACTS OF JAPAN vol. 18, no. 302 (M-1618), 9. Juni 1994 -& JP 06 063954 A (MITSUBISHI HEAVY IND LTD), 8. März 1994
- PATENT ABSTRACTS OF JAPAN vol. 96, no. 11, 29. November 1996 -& JP 08 169040 A (JAPAN STEEL WORKS LTD:THE), 2. Juli 1996

## Beschreibung

Die Erfindung betrifft ein Verfahren zum Betreiben einer Spritzgießmaschine mit einer auf einem Maschinenbett feststehenden und einer beweglichen Werkzeugplatte, die über magnetische Schließelemente während des Spritzvorganges verschließbar sind sowie die entsprechende Vorrichtung hierzu.

Aus der DE 37 15 160 A1 ist bereits eine Schließeinheit für eine Einrichtung zum Spritzgießen thermoplastischer Kunststoffe bekannt, bei der zur Erhöhung bzw. zur Erzeugung des Formschließdruckes an der Stirnplatte und/oder einem der Stirnplatte zugewandten Teil des Druckstempels mindestens ein Elektromagnet vorgesehen ist, mit dem der Formschließdruck erzeugt wird.

Weiterhin ist aus der EP 0 669 198 A1 eine Spritzgießvorrichtung mit einem an einer feststehenden Grundplatte befestigten Kern und einer an einer beweglichen Grundplatte befestigten Außenform bekannt, die zur Erhöhung der Schließkraft beidseits der Außenform befestigte Magneteinrichtungen aufweist, die Haftflächen aufweisen, welche in der Schließstellung von ferromagnetischem Material gebildeten Ankerflächen an Ankern, die an der feststehenden Grundplatte befestigt sind, berühren.

Beide bekanntgewordenen Spritzgießvorrichtungen weisen Holme auf, über die die bewegliche Werkzeugplatte geführt wird.

Aus EP 0 544 903 ist eine Zweiplattenmaschine bekannt, bei der die Schließkraft kontrolliert durch Elektromagnete aufgebracht wird.

In nachteiliger Weise sind die magnetischen Einrichtungen direkt in den Werkzeugplatten angeordnet. Der Magnetfluß geht bei dieser Anordnung auch durch das Werkzeug, und zwar als magnetischer Nebenschlußpunkt. Magnetisch betätigte Aktoren wie Ventile von eingebauten Heißkanaldüsen, werden in ihrer Funktionen beeinträchtigt oder sind nicht funktionsfähig.

Darüber hinaus reduziert der Einbau der Magnetspulen in die Werkzeugplatten die wirksame Magnetflußfläche und damit die mögliche aufbaubare Schließkraft.

Aus der DE 43 36 572 C1 ist ferner eine Formhaltevorrichtung bekannt, bei der ein Verfahrmechanismus für eine bewegliche Formaufspannplatte zum Öffnen und Schließen des Spritzgießwerkzeuges eingesetzt wird, wobei zwischen dem Verfahrmechanismus und einer der festen bzw. beweglichen Formaufspannplatten mindestens ein Körper aus positiv magnetostriktivem Material angeordnet ist, welcher jeweils von einer ein magnetisches Wechselfled erzeugenden Magnetspule umgeben ist.
Schließlich sei noch die GB 21 93 681 A erwähnt. Hieraus ist es bekannt, die Schließkraft zu kontrollieren und Einfluß auf die Schließbewegung zu nehmen. Diese Maschine ist allerdings nicht holmlos.

Die Erfindung hat sich das Ziel gesetzt, ein Verfahren zum Betrieb einer Spritzgießmaschine und eine Spritzgießmaschine zu schaffen, bei dem (der) einfache und energiearme Antriebselemente zum Verschieben der beweglichen Werkzeugplatte zum Einsatz kommen, mit denen die Taktzeit der Spritzgießmaschine verbessert wird, ein sicheres und verschleißarmes Verschließen der Werkzeuge möglich ist und im geöffneten Betriebszustand ein ungehinderter Zugriff in den Freiraum zwischen den Werkzeugplatten durchgeführt werden kann.

Die Erfindung erreicht dieses Ziel durch das Verfahren gemäß Anspruch 1 und die Vorrichtung gemäß Anspruch 4.

Erfindungsgemäß ist ein Bauteil vorgesehen, welches eine der Werkzeugplatten umgreift und mit aktivierbaren Magnetspulen zum kraftschlüssigen Zuhalten der Form versehen ist. Dieses Bauteil, das als Hülse oder in U-Form ausgestaltet sein kann, ist mit externen Antriebsmitteln versehen und kann somit relativ zu der Werkzeugplatte geführt werden. Im geöffneten Zustand der Werkzeugplatten ist hiermit ein völlig ungehinderter Zugang zu dem Werkzeug möglich.

Nach einer vorteilhaften Ausgestaltung der Erfindung läßt sich unabhängig von dem erforderlichen Weg der Werkzeugplatten zueinander dieses Bauteil so zu der nicht umhüllten Werkzeugplatte führen, daß ein Luftspalt zwischen dem Außenrand der vom Bauteil umgriffenen Werkzeugplatte zu der Innenfläche des Bauteils einstellbar ist. Dieser Luftspalt, der vorzugsweise kleiner 5 mm ist, eröffnet die Möglichkeit, bei gleichzeitiger Variation der elektromagnetischen Kräfte, eine beliebige Schließkraft auf das Werkzeug aufzubringen.

Weiterhin wird bei dem erfindungsgemäßen Gegenstand keine werkzeuginterne Funktion negativ beeinflußt, da das Werkzeug durch die Gestaltung der beweglichen Platte nicht vom Verriegelungsmagnetfeld durchsetzt wird.

Ein Beispiel der Erfindung ist in der beigefügten Zeichnung dargelegt. Dabei zeigen die
- Figur 1: eine Spritzgießmaschine im geöffneten Zustand;
- Figur 2: eine Spritzgießmaschine im geschlossenen Zustand.

in beiden Figuren ist eine Spritzgießmaschine dargestellt mit einer feststehenden Werkzeugplatte 12 und einer auf einem Maschinenbett 13 beweglichen Werkzeugplatte 11. Eine Form 14 befindet sich zwischen einem beweglichen Werkzeug 15 und einem festen Werkzeug 16.

Im geöffneten Zustand befindet sich zwischen dem festen Werkzeug und dem beweglichen Werkzeug 15 ein Entnahmebereich 18. Im vorliegenden Beispiel wird die bewegliche Werkzeugplatte von einem Bauteil 31 umgriffen.

Das Bauteil 31 ist im Bereich seiner Mündung 32 in der Weise ausgestaltet, daß seine Stirn 33 mit einer freien Fläche 17 der feststehenden Werkzeugplatte 12 korrespondiert.

Das Bauteil 31 ist dabei als topfförmiges Bauteil 36 im unteren Teil der Zeichnung und als U-förmiges Bauteil 35 im oberen Teil der Zeichnung dargestellt. Das U-förmige Bauteil 35 setzt sich dabei zusammen aus nicht weiter dargestellten U-förmigen Stabelementen 37.

Am Boden 38 des topfförmigen Bauteils 36 sowie am der Mündung 32 entgegengesetzten Ende der U-förmigen Stabelementen 37 sind Magnetspulen 39 angeordnet.

Das Bauteil 31 wird durch Antriebsmittel 26 bewegt.

An der beweglichen Werkzeugplatte 11 ist ein Auswerfer 27 vorgesehen.

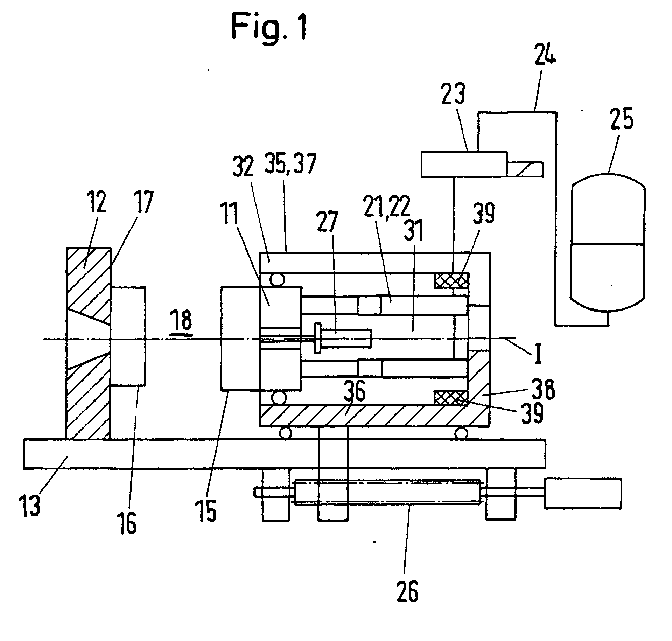

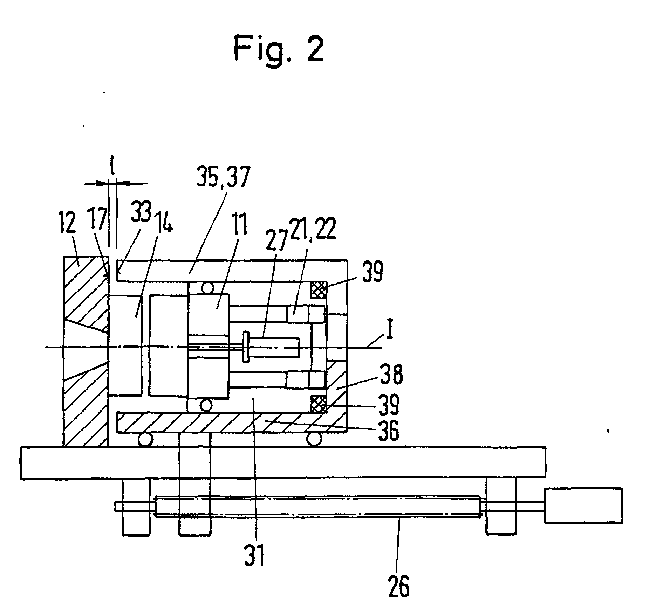

In den vorliegenden Figuren 1 und 2 ist zwischen dem Boden 38 des topfförmigen Bauteils 36 bzw. dem unteren Teil der U-förmigen Stabelemente 37 und der beweglichen Werkzeugplatte 11 eine Antriebseinheit 21 vorgesehen. Im vorliegenden Fall ist diese Antriebseinheit 21 als Kolbenzylindereinheit 22 ausgestaltet, die zu beiden Seiten der Mittenachse I angeordnet ist.

Die Kolben-Zylinder-Einheit 22 ist über eine Hydraulikleitung 24, in der ein Wegeventil 23 vorgesehen ist, mit einem Speicher 25 verbunden.

Durch nicht weiter dargestellte Meß- und Regeleinrichtungen sind die bewegliche Werkzeugplatte 11 und das Bauteil 31 über die Antriebseinheit 21 sowie die Antriebsmittel 26 so verfahrbar, daß die Mündung des Bauteils 32 zur freien Fläche 17 in der Weise aufeinander zufahrbar sind, daß ein Luftspalt I verbleibt. In vorteilhafter Weise ist dieser Luftspalt auf < 5 mm einstellbar.

### Positionsliste

### Spritzgießmaschine

- 11: Bewegliche Werkzeugplatte
- 12: Feststehende Werkzeugplatte
- 13: Maschinenbett
- 14: Form
- 15: Werkzeug beweglich
- 16: Werkzeug fest
- 17: Freie Fläche
- 18: Entnahmebereich

### Antriebe

- 21: Antriebseinheit für bewegliche Werkzeugplatte
- 22: Kolben-Zylinder-Einheit
- 23: Wegeventil
- 24: Hydraulikleitung
- 25: Speicher
- 26: Antriebsmittel für das Bauteil (31)
- 27: Auswerfer

### Magnetische Zuhalteeinheit

- 31: Bauteil
- 32: Mündung des Bauteils (31)
- 33: Stirn
- 35: U-förmiges Bauteil
- 36: Topfförmiges Bauteil
- 37: U-förmige Stabelemente
- 38: Boden des Bauteils 36
- 39: Magnetspulen

- I: Luftspalt
- I: Mittenachse

## Patentansprüche

1. Verfahren zum Betreiben einer Spritzgießmaschine mit einer auf einem Maschinenbett feststehenden und einer beweglichen Werkzeugplatte, die über magnetische Schließelemente während des Spritzvorganges verschließbar sind, umfassend folgende Schritte:
a) zum Schließen der Form wird die bewegliche gegen die feststehende Werkzeugplatte geführt
b) gleichzeitig wird ein die bewegliche Werkzeugplatte umgreifendes Bauteil in einer Bewegungsrichtung relativ zur beweglichen Werkzeugplatte stirnseitig soweit bis auf eine Distanz von wenigen Millimetern an die feststehende Werkzeugplatte hinbewegt
c) anschließend wird der Antrieb der beweglichen Werkzeugplatte verriegelt
d) durch Stromzuführung werden am die Werkzeugplatte umgreifenden Bauteil angeordnete Elektromagnete aktiviert
e) in Abhängigkeit des Spritzvorganges wird die Krafthöhe und die Zeitdauer der elektromagnetischen Schließkrafterzeugung eingestellt
f) zum Ende des Spritzzyklus werden die bewegliche Werkzeugplatte und das sie umgreifende Bauteil in ihre den Freiraum freigebende Endstellung bewegt und zwar soweit, daß im geöffneten Betriebszustand der Spritzgießmaschine ein ungehinderter Zugriff in den Freiraum oberhalb des Maschinenbettes zwischen den Werkzeugplatten besteht
g) während das die bewegliche Werkzeugplatte umgreifende Bauteil gleichzeitig relativ zur Bewegungsrichtung der beweglichen Werkzeugplatte verfahren wird.

2. Verfahren nach Anspruch 1,
**dadurch gekennzeichnet,**
**daß** der Antrieb der beweglichen Werkzeugplatte hydraulisch erfolgt,
**daß** der Antrieb der beweglichen Werkzeugplatte an das sie umgreifende Bauteil gekoppelt ist, wobei die Bewegungen zueinander jeweils entgegengesetzt gerichtet sind,
und **daß** bei der Zufahrbewegung des die bewegliche Werkzeugplatte umgreifenden Bauteils das aus dem hydraulischen Werkzeugplattenantrieb nach gegenseitiger Berührung der Werkzeuge verdrängte Hydrauliköl einem Speicher zugeführt wird.

3. Verfahren nach Anspruch 2,
**dadurch gekennzeichnet,**
**daß** beim Öffnen der Form die im Speicher gesammelte Energie für die Relativbewegung
der beweglichen Werkzeugplatte zum sie umgreifenden Bauteil verwendet wird.

4. Spritzgießmaschine mit einer auf einem Maschinenbett feststehenden und einer durch einen Verfahrmechanismus beweglichen Werkzeugplatte, bei der zwischen dem Verfahrmechanismus und einer der Werkzeugplatten aktivierbare Magnetspulen vorgesehen sind,
zur Durchführung des Verfahrens nach Anspruch 1,
wobei
ein mit aktivierbaren Magnetspulen (39) zum kraftschlüssigen Zuhalten der Form (14) versehenes Bauteil (31) vorgesehen ist, das die bewegliche Werkzeugplatte (11) umgreift,
und externe Antriebsmittel (26), mit denen die Mündung (32) des Bauteils (31) bis dicht an die feststehende Werkzeugplatte (12) heran und eine Antriebseinheit (21), mit der die bewegliche Werkzeugplatte zur freien Entnahme der Werkstücke aus dem Entnahmebereich (18) heraus verschiebbar ist, vorgesehen sind

5. Spritzgießmaschine nach Anspruch 4,
**dadurch gekennzeichnet,**
**daß** die bewegliche Werkzeugplatte (11) mit dem Bauteil (31) verschiebbar ist und
**daß** die feststehende Werkzeugplatte (12) als Magnetanker ausgebildet ist und eine mit der Stirn (33) der Bauteilmündung (32) korrespondierende Freifläche (17) aufweist.

6. Spritzgießmaschine nach Anspruch 4,
**dadurch gekennzeichnet,**
**daß** die vom Bauteil (31) umgriffene Werkzeugplatte (11, 12) aus dia- oder paramagnetischem Material, z.B. Aluminiumlegierung, besteht.

7. Spritzgießmaschine nach einem der o.g. Ansprüche 4 bis 6,
**dadurch gekennzeichnet,**
**daß** der Luftspalt (I) zwischen dem Außenrand (19) der vom Bauteil (31) umgriffenen Werkzeugplatte (11, 12) und der Innenfläche (34) des Bauteils (31) kleiner als 5 mm ist.

8. Spritzgießmaschine nach Anspruch 4,
**dadurch gekennzeichnet,**
**daß** das eine der Werkzeugplatten (11, 12) umgreifende Bauteil (31) eine U-förmige Gestalt (35) aufweist.

9. Spritzgießmaschine nach Anspruch 4,
**dadurch gekennzeichnet,**
**daß** das eine der Werkzeugplatten (11, 12) umgreifende Bauteil (31) als Topf (36) ausgestaltet ist.

10. Spritzgießmaschine nach Anspruch 9,
**dadurch gekennzeichnet,**
**daß** der Topf (36) aus einzelnen mit aktivierbaren Magneten versehenen U-förmigen Stabelementen (37) aufgebaut ist.

11. Spritzgießmaschine nach einem der Ansprüche 4 bis 10,
**dadurch gekennzeichnet,**
**daß** an dem Boden (38) des die bewegliche Werkzeugplatte umgreifenden Bauteils (31) Kolben-Zylinder-Einheiten (22) angebracht sind, durch die die bewegliche Werkzeugplatte (11) bewegt wird.

12. Spritzgießmaschine nach Anspruch 11,
**dadurch gekennzeichnet,**
**daß** die Kolben-Zylinder-Einheiten (22) über eine ein Wegeventil (23) aufweisende Hydraulikleitung (24) mit einem Speicher (25) verbunden sind.

## Claims

1. A method for operating an injection-moulding machine with a mould plate which is fixed on a machine bed and one which is movable, which can be locked by magnetic closing elements during the injection operation, comprising the following steps:
a) to close the mould, the movable mould plate is guided against the fixed mould plate,
b) at the same time, a component which surrounds the movable mould plate is moved towards the fixed mould plate in a direction of movement relative to the movable mould plate on its end face up to a distance of a few millimetres,
c) then the drive of the movable mould plate is locked,
d) electromagnets arranged on the component which surrounds the mould plate are activated by a supply of current,
e) the level of force and the duration of the electromagnetic closing force generation are set according to the injection operation,
f) at the end of the injection cycle, the moveable mould plate and the component surrounding it are moved into their final position releasing the cavity, so far in the opened operating state of the injection-moulding machine there is unhindered access to the cavity above the machine bed between the mould plates,
g) while the component surrounding the movable mould plate is simultaneously moved relative to the direction of movement of the movable mould plate.

2. A method according to Claim 1, **characterised in that** the movable mould plate is driven hydraulically, that the drive of the movable mould plate is coupled to the component which surrounds it, the movements relative to each other being in opposite directions, and that upon the approach movement of the component surrounding the movable mould plate the hydraulic oil which is displaced out of the hydraulic mould-plate drive after mutual contacting of the moulds is fed to a reservoir.

3. A method according to Claim 2, **characterised in that** upon opening the mould the energy stored in the reservoir is used for the movement of the movable mould plate relative to the component which surrounds it.

4. An injection-moulding machine with a mould plate which is fixed on a machine bed and one which is movable by means of a displacement mechanism, in which activatable magnetic coils are provided between the displacement mechanism and one of the mould plates,
for carrying out the method according to Claim 1,
wherein
a component (31) provided with activatable magnetic coils (39) for the non-positive locking of the mould (14), which component surrounds the movable mould plate (11),
and external drive means (26) with which the mouth (32) of the component (31) can be displaced until close to the fixed mould plate (12) and a drive unit (21) with which the movable mould plate can be displaced for freely removing the workpieces from the removal region (18) are provided.

5. An injection-moulding machine according to Claim 4, **characterised in that** the moveable mould plate (11) is displaceable with the component (31) and that the fixed mould plate (12) is designed as a magnet armature and has a free surface (17) corresponding with the end face (33) of the component mouth (32).

6. An injection-moulding machine according to Claim 4, **characterised in that** the mould plate (11, 12) which is surrounded by the component (31) is made of diamagnetic or paramagnetic material, e.g. aluminium alloy.

7. An injection-moulding machine according to one of the above Claims 4 to 6, **characterised in that** the air gap (I) between the outer edge (19) of the mould plate (11, 12) which is surrounded by the component (31) and the inner surface (34) of the component (31) is smaller than 5 mm.

8. An injection-moulding machine according to Claim 4, **characterised in that** the component (31) which surrounds one of the mould plates (11, 12) is U-shaped (35).

9. An injection-moulding machine according to Claim 4, **characterised in that** the component (31) which surrounds one of the mould plates (11, 12) is in the form of a pot (36).

10. An injection-moulding machine according to Claim 9, **characterised in that** the pot (36) is constructed of individual U-shaped rod elements (37) provided with activatable magnets.

11. An injection-moulding machine according to one of Claims 4 to 10, **characterised in that** piston-cylinder units (22) are attached to the bottom (38) of the component (31) which surrounds the movable mould plate, by means of which units the movable mould plate (11) is moved.

12. An injection-moulding machine according to Claim 11, **characterised in that** the piston-cylinder units (22) are connected to a reservoir (25) via a hydraulic line (24) bearing a distributing valve (23).

## Revendications

1. Procédé d'exploitation d'une presse d'injection comprenant un plateau porte-moule fixe sur un bâti et un plateau porte-moule mobile, lesquels peuvent être fermés pendant le processus d'injection par des éléments de fermeture magnétiques, comprenant les étapes suivantes :
a) pour la fermeture du moule, le plateau porte-moule mobile est déplacé vers le plateau porte-moule fixe,
b) en même temps, un élément structurel entourant le plateau porte-moule mobile est déplacé dans un mouvement relatif par rapport au plateau porte-moule mobile jusqu'à ce que sa face frontale soit distante de quelques millimètres du plateau porte-moule fixe,
c) ensuite, l'entraînement du plateau porte-moule mobile est bloqué,
d) des électroaimants, disposés sur l'élément structurel entourant le plateau porte-moule, sont activés par l'admission de courant,
e) la force à appliquer et la durée de la pression de serrage à développer par voie électromagnétique sont réglées en fonction du processus d'injection,
f) à la fin du cycle d'injection, le plateau porte-moule mobile et l'élément structurel l'entourant sont déplacés vers leur position finale libérant le dégagement, à savoir jusqu'à ce que, dans la position de service ouverte de la presse d'injection, il soit possible d'accéder librement dans le dégagement situé au-dessus du bâti de la presse entre les plateaux porte-moule,
g) pendant que l'élément structurel entourant le plateau porte-moule mobile est déplacé en même temps dans un mouvement relatif par rapport au sens de déplacement du plateau porte-moule mobile.

2. Procédé selon la revendication 1, **caractérisé en ce que** l'entraînement du plateau porte-moule mobile est actionné par voie hydraulique, **en ce que** l'entraînement du plateau porte-moule mobile est couplé à l'élément structurel entourant ledit plateau, les déplacements de l'un par rapport à l'autre étant orientés en sens opposé et **en ce que**, au moment du déplacement de fermeture de l'élément structurel entourant le plateau porte-moule, après la mise en contact des moules, l'huile hydraulique poussée hors de l'entraînement hydraulique du plateau porte-moule est acheminée vers un réservoir.

3. Procédé selon la revendication 2, **caractérisé en ce que**, au moment de l'ouverture du moule, l'énergie accumulée dans le réservoir est utilisée pour le mouvement relatif du plateau porte-moule vers l'élément structurel l'entourant.

4. Presse d'injection comprenant un plateau porte-moule fixe sur un bâti et un plateau porte-moule mobile au moyen d'un mécanisme de commande, dans laquelle, entre le mécanisme de commande et l'un des plateaux porte-moule, sont prévues des bobines magnétiques activables, laquelle presse d'injection est destinée à la mise en oeuvre du procédé selon la revendication 1, dans laquelle il est prévu un élément structurel (31), qui est muni de bobines magnétiques (39) activables, qui est destiné à maintenir le moule (14) fermé par conjugaison de force et qui entoure le plateau porte-moule (11) mobile, et il est prévu des moyens d'entraînement externes (26) par lesquels le bec (32) de l'élément structurel (31) peut être déplacé jusqu'à entrer en contact étroit avec le plateau porte-moule (12) fixe et une unité d'entraînement (21) par laquelle le plateau porte-moule mobile peut être déplacé hors de la zone de prélèvement (18) pour pouvoir retirer sans entrave les pièces.

5. Presse d'injection selon la revendication 4, **caractérisée en ce que** le plateau porte-moule (11) mobile peut se déplacer avec l'élément structurel (31) et **en ce que** le plateau porte-moule (12) fixe est conçu sous forme d'induit magnétique et comporte une surface libre (17) correspondant à la face frontale (33) du bec (32) de l'élément structurel.

6. Presse d'injection selon la revendication 4, **caractérisée en ce que** le plateau porte-moule (11, 12) entouré par l'élément structurel (31) est réalisé dans une matière diamagnétique ou paramagnétique, telle qu'un alliage d'aluminium.

7. Presse d'injection selon une des revendications précédentes 4 à 6, **caractérisée en ce que** la fente d'air (I) entre le bord extérieur (19) du plateau porte-moule (11, 12) entouré par l'élément structurel (31) et la face intérieure (34) de l'élément structurel (31) est inférieure à 5 mm.

8. Presse d'injection selon la revendication 4, **caractérisée en ce que** l'élément structurel (31) entourant l'un des plateaux porte-moule (11, 12) est conçu avec une structure (35) en forme de U.

9. Presse d'injection selon la revendication 4, **caractérisée en ce que** l'élément structurel (31) entourant l'un des plateaux porte-moule (11, 12) est conçu en forme de cuve (36).

10. Presse d'injection selon la revendication 9, **caractérisée en ce que** la cuve (36) est formée par des tiges (37) individuelles, en forme de U, munies d'aimants activables.

11. Presse d'injection selon une des revendications 4 à 10, **caractérisée en ce que** des vérins (22) sont montés sur le fond (38) de l'élément structurel (31) entourant le plateau porte-moule mobile, lesquels déplacent le plateau porte-moule (11) mobile.

12. Presse d'injection selon la revendication 11, **caractérisée en ce que** les vérins (22) sont reliés à un réservoir (25) par l'intermédiaire d'une conduite hydraulique (24) munie d'un distributeur (23).
